(19) Europäisches Patentamt
European Patent Office
Office européen des brevets

(11) **EP 3 481 583 B1**

(12) **EUROPEAN PATENT SPECIFICATION**

(45) Date of publication and mention
of the grant of the patent:
**27.01.2021 Bulletin 2021/04**

(21) Application number: **17746371.8**

(22) Date of filing: **11.07.2017**

(51) Int Cl.:
**B23K 26/00** *(2014.01)*    **B23K 26/0622** *(2014.01)*

(86) International application number:
**PCT/CZ2017/050027**

(87) International publication number:
**WO 2018/010707 (18.01.2018 Gazette 2018/03)**

(54) **METHOD AND SYSTEM OF ULTRAFAST LASER WRITING OF HIGHLY-REGULAR PERIODIC STRUCTURES**

VERFAHREN UND SYSTEM ZUR ULTRASCHNELLEN LASER-GRAVUR VON HOCHREGULÄREN PERIODISCHEN STRUKTUREN

PROCÉDÉ ET SYSTÈME DE GRAVURE DE STRUCTURES PÉRIODIQUES HAUTEMENT RÉGULIÈRES PAR LASER À IMPULSIONS ULTRA-COURTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.07.2016 CZ 20160424**

(43) Date of publication of application:
**15.05.2019 Bulletin 2019/20**

(73) Proprietors:
- **Fyzikální ústav AV CR, v.v.i.**
  **18221 Praha 8 (CZ)**
- **Orazi, Leonardo**
  **42121 Reggio Emilia (IT)**
- **Gnilitskyi, Iaroslav**
  **42121 Reggio Emilia (IT)**

(72) Inventors:
- **ORAZI, Leonardo**
  **42121 Reggio Emilia (IT)**
- **GNILITSKYI, Iaroslav**
  **42121 Reggio Emilia (IT)**
- **DERRIEN, Thibault**
  **252 41 Dolni Brezany (CZ)**
- **BULGAKOVA, Nadezhda**
  **252 41 Dolni Brezany (CZ)**
- **MOCEK, Tomás**
  **252 41 Dolni Brezany (CZ)**

(56) References cited:
**US-A1- 2015 273 624**

- **RUIZ DE LA CRUZ A ET AL: "High speed inscription of uniform, large-area laser-induced periodic surface structures in Cr films using a high repetition rate fs laser", OPTICS LETTERS, OPTICAL SOCIETY OF AMERICA, vol. 39, no. 8, 15 April 2014 (2014-04-15) , pages 2491-2494, XP001588142, ISSN: 0146-9592, DOI: 10.1364/OL.39.002491 [retrieved on 2014-04-14]**

## Description

## Technical Field

The present invention relates generally to periodic surface structuring via laser ablation and more particularly to generating highly-regular periodicity of nanostructures on metallic surfaces at high processing rates by means of providing a high degree of coherence of the surface electromagnetic waves.

## Background Art

Nanostructures are structures of intermediate size between microscopic and molecular objects, usually referred to a few up to hundreds of nanometers at least in one spatial dimension. In general, a nanotechnology is a technical field dealing with manipulation of matter on an atomic, molecular and supermolecular scale. By term manipulation, it is particularly meant technological goal of precisely manipulating atoms and molecules for fabrication of macroscale products.

With increasing demand for nanostructured materials, the technology of fast preparation and processing has been raising. But, the currently pending problem is to find an appropriate method for fast and cheap preparation of highly regular periodic structures (HR-PS) on material surfaces.

The known methods involve irradiation of solid targets by ultrashort laser pulses which leads to the formation of Laser-Induced Periodic Surface Structures referred usually as LIPSS. These structures represent a periodic surface relief whose orientation is directly connected with polarization of the laser light. LIPSS can be formed on the surfaces of different materials (metals, semiconductors, dielectrics, polymers).

LIPSS-based applications have already emerged during the last decade such as color marking, change in surface wettability, and growth of biological cells. However, two main problems still exist, which prevent further implementation of these structures in various fields such as microelectronics, optoelectronics, photovoltaics. There is increasing demand for structural uniformity and high rate of their imprinting into material surfaces.

Currently known LIPSS technology suffers from loss of regularity, appearance of double periodicity, and numerous bifurcation points. Quantitatively, the surface structural periodicity can be mathematically described by applying the 2-Dimentional Fast Fourier Transform (2D-FFT) analysis of Scanning Electron Microscopy (SEM) or Atomic Force Microscopy (AFM) images. An average period (or wavelength) of the structures is determined as the inverse of the peak position of the 2D-FFT and regularity of the period is characterized by the dispersion angle of FFT signal. The most regular structures achieved by the present time on only one material, Cr (A. Ruiz de la Cruz, R. Lahoz, J. Siegel, G.F. de la Fuente, J. Solis, High speed inscription of uniform, large-area laser-induced periodic surface structures in Crfilms using a high repetition rate fs laser, Opt. Lett. 39, 2491-2494 (2014)) are still imperfect. The method used in the mentioned document does not preserve high regular period from one to another line of structure on large area (dispersion angle of 2D-FFT is ~26.5°±1.8°).

The laser-induced periodic surface structures are a subject of following documents:

The patent document US7875414 discloses a method of periodic structure formation on extensive area with a uniaxial laser beam. The method uses a laser fluence above but nearly as low as ablation threshold. Moreover, the overlapped scanning is set such that the number of pulses of the laser beam irradiated on an identical position of the material surface is within a range of 10 to 300, but it is not still enough to achieve the high regularity and fast producing.

The patent application US20080216926 refers to structures on metallic materials but the method does not provide regularity of periodic structure.

It should be mentioned that none of them are directly referring to high-speed writing of highly-regular periodic structures on large area.

## Summary of Invention

The present invention provides a method for obtaining periodic structure on a surface of a substrate in accordance with claim 1. Said method allows ultrafast writing by the laser, and achieves highly regular periodic structures having an angle dispersion of FFT signal smaller than 15°. The periodic structure with the periodicity between $\lambda$ and $\lambda/2$, wherein $\lambda$ is the laser wavelength, is provided by the method of the invention, which does not show any bifurcation point. The periodic structure having an angle dispersion of FFT signal smaller than 15° and not showing any bifurcation points are referred herein as a highly regular periodic structure.

The fluence is selected so that strong the ablation of the substrate is induced with avoiding formation of excessive volume of molten substrate, whereby ablation occurs with preserving the said periodic absorption profile on the metallic surface, thus forming highly regular periodic structure.

The wavelength $\lambda$ of the laser beam is typically in the spectral range from UV (e.g., from 100 nm) to mid-IR (e.g., from 10 $\mu$m).

The term substrate designates a material onto which the periodic structure is applied. The substrate is also commonly called "material", "target", "sample" in the field of the art.

The method as described herein is based on determining and achieving conditions necessary for creating the highly regular periodic structure. The conditions as follows:

As a first condition, for efficiently driving the free electrons by the pulsed laser beam, the laser pulse duration must be less than the time that electrons take in the substrate until their thermalization with lattice. Typically, the laser beam pulse duration will be at subpicosecond duration range but it may be also extended to several picoseconds.

As a second condition, the size of the illuminated area must be smaller than or equal to three characteristic lengths of the surface electromagnetic waves (SEW) decay, which is typically ≤30 μm, depending on the substrate material. In this case, the free electrons driven into motion by the SEW oscillate coherently over the whole illuminated area, thus securing highly periodic absorption of laser energy within the illuminated area with periodicity along light polarization.

The characteristic SEW decay length L must be of order of the laser spot size used to generate the structures. Accounting for exponential decay of SEW, the laser spot size on the substrate surface has not to exceed 3L. The SEW decay length is given by the expression

$$L = 1/(2 \times Im(\beta)), (1)$$

where $\beta = 2\pi(\varepsilon/(\varepsilon+1))^{0.5}/\lambda$ at the air-substrate interface. The dielectric permittivity $\varepsilon$ is given by experimental measurements and also available in literature as known by a person skilled in the art.

By comparing the SEW decay length L of the substrate with the regularity of the obtained highly-regular periodic structures (measured by a quantity $\delta\theta$ describing the dispersion over orientation angle of the parallel structures in respect of the used laser polarization), an excellent correlation was found.

As a third condition, the laser fluence higher than the ablation threshold applied to the small illuminated area provides large amplitude of the absorption pattern culminated by the regime of strong ablation, driven by enhanced mechanical stresses in radial direction, already at single laser pulses that allows to avoid formation of excessive volume of molten material remaining on the surface after ablation. Strong ablation followed by quick solidification of remaining shallow melt preserves the regular periodic absorption profile on the metallic surface, thus forming highly regular periodic structure. The single-pulse laser fluence has to be sufficient to melt material and induce its developed ablation and can be from fraction of J/cm$^2$ to several J/cm$^2$ (e.g., up to 20 J/cm$^2$) depending on the ablation threshold of particular material at particular wavelength.

As a fourth condition, the dielectric permittivity $\varepsilon$ of the substrate must exhibit a high damping, i.e. the imaginary part of dielectric permittivity is close to or higher than the absolute value of its real part for the considered irradiation wavelength $\lambda$, as expressed by the following equation:

$$Im [\varepsilon(\lambda)] \geq |Re [\varepsilon(\lambda)]| (2).$$

Typically, metallic substrates obey this condition.

Once the single illumination event results in highly regular periodic structure formation, the next laser pulse can overlap with the previous one only partially, by few structure periods, reproducing the periodic structure on the new illuminated area via inducing coherent electron oscillations which are pre-defined by overlapping with the structured area. It is preferred that the overlap is at least 30 % of the spot area, more preferably at least 50 % of the spot area.

For this, the scanning speed and the repetition rate of the laser should be adjusted so that the overlap of two spots irradiated one after another is provided. High scanning speed and high repetition rate (e.g., higher than 1 kHz, preferably about 1 MHz) are particularly suitable for industrial use of the invention. High scanning speed can be achieved for example by employing galvanometric scanning head or another high speed scanner, e.g., based on the fringe projection technology, preferably in combination with a translational stage.

The relatively small overlapping between illuminated areas and scanlines sufficient to produce highly regular periodic structures enables high scanning speed of substrate structuring provided for example by the scanning technique which combines a high-speed scanner and translation stage. Polarization of the laser light can be at any angle relative to scanning direction.

The present invention provides a fast and cheap production method for writing of the HR-PS on large areas of substrate surfaces. Surface periodic structures are formed as a result of interference of incident and scattered surface electromagnetic waves (SEW) followed by self-organization effects which do not lead directly to regular periodic structures. Further technical problem solved by this invention is to minimize of negative influence of the processes involved in the periodic structure formation (thermoplastic deformations, non-thermal melting) and ablation mechanisms (spallation, phase explosion, Coulomb explosion). The Method of Direct Formation of Highly-Regular Structures on Metallic Materials provides activation of Surface Electromagnetic Wave (SEW) interfering with the incident laser wave at the surface of the substrate in a manner which ensures high quality and regularity of the obtained pattern.

The above mentioned problem disappear with the method carried out with the present invention, more particularly when diameter of the irradiated spot is smaller or equal to 30 micrometres and/or the laser pulse duration of the laser beam is smaller or equal to 10 picoseconds, more preferably it is lower than 1 picosecond.

In one embodiment, for the laser beam wavelength of less than 1300 nm. The following materials are suitable as the substrate: Cr, Fe, Mo, Ni, steels, Ti, W, alloys thereof.

In one embodiment, for the laser beam wavelength of less than 900 nm. The following materials are suitable as the substrate: Be, Bi, Co, Cr, Fe, Mo, Nb, Ni, steels, Ti, V, W, alloys thereof.

In one embodiment, for the laser beam wavelength of less than 500 nm. The following materials are suitable as the substrate: Ag, Au, Be, Bi, Co, Cr, Cu, Fe, Mo, Nb, Ni, Pt, steels, Ta, Ti, V, W, alloys thereof.

According to another aspect of the present invention, a device adapted specifically for carrying out the method of the invention is provided in accordance with claim 8.

The rotation of the polarizer and of the half-wave plate controls the direction of the laser-induced structure.

The translation stage (xy-stage or xyz-stage) provides for translational and/or rotational movement of the substrate.

In one embodiment, the device may further comprise an attenuator positioned so that the laser beam generated from the means for generation of the pulsed laser beam is directed to the attenuator, a telescope, and means for directing the laser beam from the attenuator to the telescope. The telescope allows, located in front of the scanning head of galvanoscanner, to increase the aperture of the beam with the use of positive focal length lenses or that are separated by the sum of their focal lengths and, thus, to achieve focusing of the laser beam to an exact and sufficiently small illuminated area.

## Brief Description of Drawings

Fig. 1 illustrates an example of a device for ultrafast laser writing of highly-regular periodic structures on substrate surface.

Fig. 2 illustrates the scheme of laser beam expanding based on the telescope principle.

Fig. 3 illustrates the scheme of laser beam focusing.

Fig. 4 illustrates the direction of the produced structures relative to the polarization and scanning directions whose mutual orientation can be arbitrary.

Fig. 5 illustrates overlapping of illuminated spots in a scanline and between scanlines upon scanning the substrate surface.

Fig. 6 illustrates the typical view of highly-regular periodic structures on metallic substrate, molybdenum as an example.

Fig. 7 illustrates an example of the algorithm of the method.

Fig. 8 summarizes the requirements for selection of materials able to exhibit Highly-Regular Periodic Structures upon pulsed laser irradiation at 1030 nm wavelength: (a) shows the SEW decay length of materials; (b) presents the dielectric permittivity of materials which satisfy the selection criteria).

## Description of Embodiments

The invention is herein further illustrated by way of examples which should not be construed as further limiting.

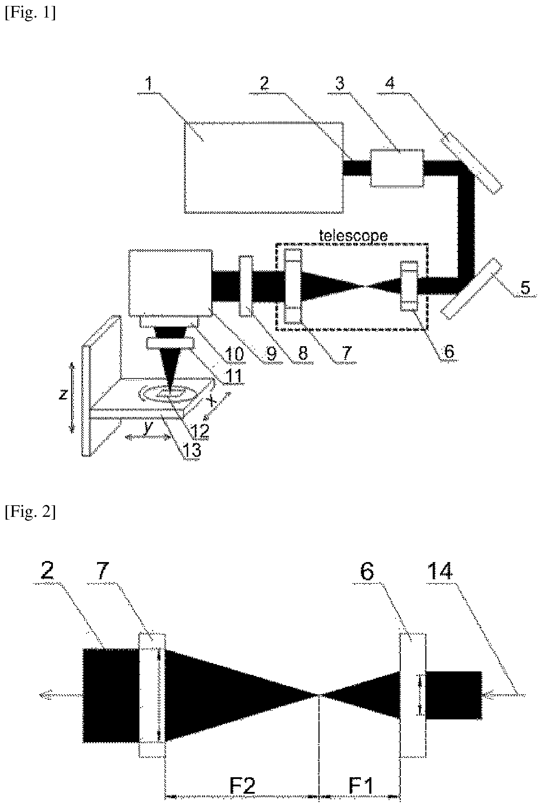

In one example, as shown in the figure 1, there is a device comprising an ultrafast laser system **1** with pulse duration of order or smaller than 10 ps and high repetition rate. The energy per pulse is selected in order to overcome the ablation threshold of the material under treatment with the mean of attenuator **3**. The beam **2** is directed to the telescope comprising a pair of lenses **6** and **7,** with a sequence of mirrors **4** and **5**. After the telescope, the expanded beam **2** is deflected on the surface of substrate **12** by means of a galvanometric scanning head **9** connected to a f-theta lens **10**. The rotation of a half-wave plate **8** with respect to a polarizer **11** allows defining the direction of the laser-induced structures. The laser beam **2** was focused on the substrate surface **12** and scanned by galvanoscanner head **9** to an extent related to the focal length *F* in order that deflection of the beam **2** is negligible. Much larger areas were obtained by moving the sample with a motorized xyz-stage **13** under galvanoscanner **9**.

The proposed setup allows obtaining both regular and irregular structures with aspect ratio depending on the material **12**. The use of linearly polarized light makes possible to obtain quasi-regular linear structures with periodicity below the wavelength of the laser beam.

The factors that permit to obtain highly-regular structures are: Laser spot diameter, not more than three characteristic lengths of the SEW decay length. This enables to maintain the coherence of laser-excited electrons within the ablated structures for subsequent laser pulses.

The methods to decrease the laser spot are: increasing aperture of the beam **2** before the galvanoscanning head **9** by means of a telescope, as shown in Fig. 2, comprising two lenses **6** and **7** that expand the beam **2** coming from direction **14**.

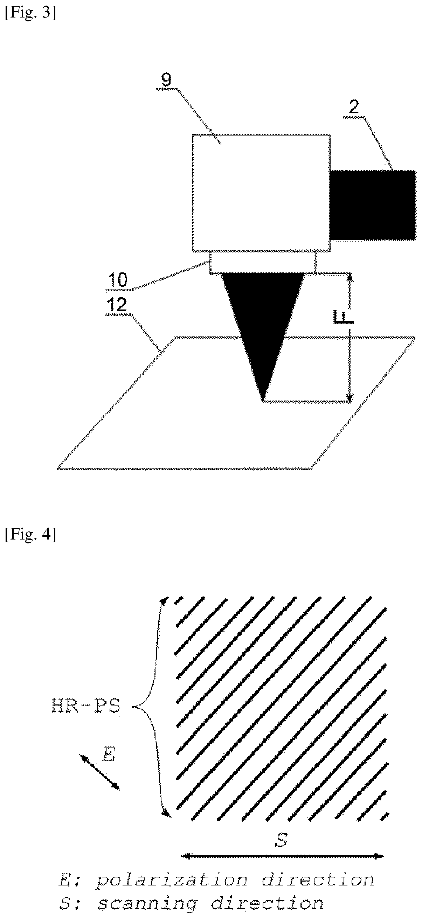

In another example, as shown in Fig. 3, the focusing f-theta lens **10** decreasing the laser spot is presented.

Angle between polarization direction *E* and scanning direction *S* is schematically shown in Fig. 4. Polarization direction *E* is oriented perpendicularly to the desired direction of the structures to be obtained.

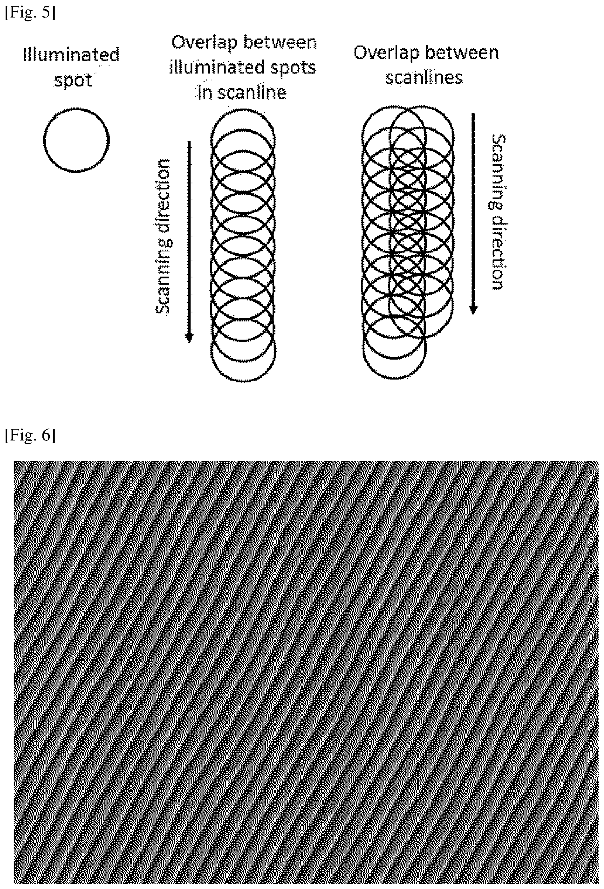

Maintaining overlap between the illuminated spots and between scanning lines was solved in preferred embodiment as shown in Fig. 5. The different scanlines must overlap in order to maintain coherence between the structures on the earlier processed surface and the new one.

The optimal laser fluence was estimated depending on the substrate **12** in order to obtain the material ablation and to avoid excessive volume of melt substrate **12**. Small illumination spots are favouring a deeper ablation of substrate **12** due to higher radial stresses compared to larger spots.

Fig. 6 illustrates a SEM image of HR-PS. The shown sample was produced by method of scanning the surface of molybdenum with the wavelength of 1030 nm, pulse duration of 213 fs, laser energy of 0.75 J/pulse, 62% overlap between pulses and 50% overlap between scanlines.

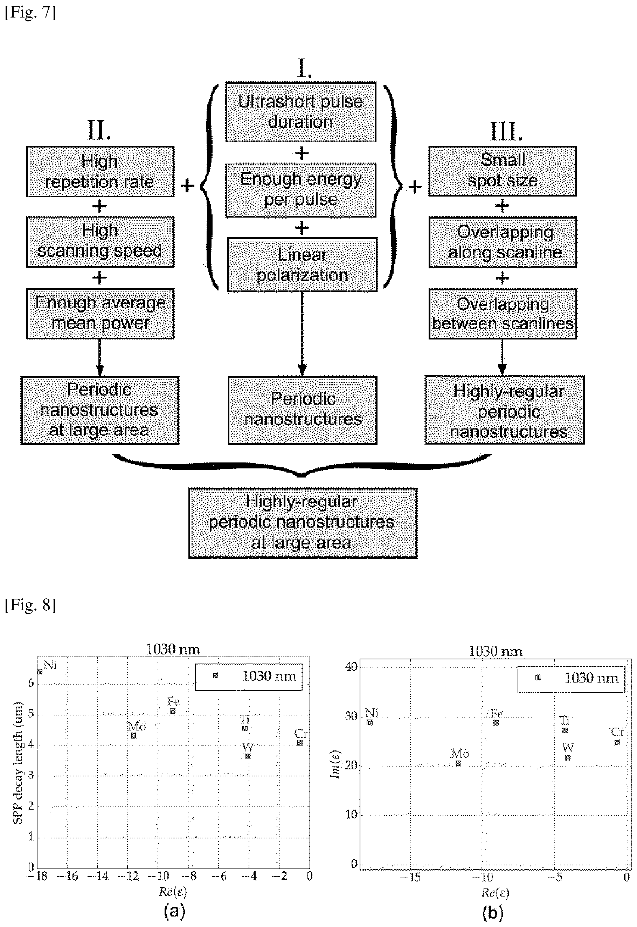

Fig. 7 illustrates the requirements for ultrafast laser writing of highly-regular periodic structures on metallic substrate **12.** Column I summarizes usual conditions for periodic structure formation on metallic surfaces. Extremely high writing speed on large area (Column II) together with small illumination spots overlapping along scanline and overlapping between scanlines (Column III) allow to achieve high regularity of periodic structures.

Fig. 8 illustrates an example of selection of materials for HR-PS writing at wavelength of 1030 nm based on the analysis of the mechanism of their formation. The structures originate from the excitation of Surface Electromagnetic Waves (SEW) at the surface of metallic materials. Materials allowing for such possibility share specific criteria disclosed in summary of invention. In the Figure the materials are presented whose SEW decay length is smaller than 10 $\mu$m and which possess high optical damping. It is thus disclosed that the spatial coherence of the excited SEW within the laser illuminated spot is at the origin of the high regularity of the obtained periodic structures. The SEW can be initiated by any subwavelength scattering center. The scattering centers can be a point-like defect, a dipole-like nanotip forming the sample roughness, a bigger object like a nanoparticle present at the surface, or even a scratch. By using a small spot size, excited SEWs interact on a small area where spatial coherence can be conserved. The distance of the excited SEW is linked with the decay length L of the SEWs. The usage of a small spot size allows triggering selectively the excitation of short-range SEWs.

**Industrial Applicability**

Ultrafast laser microprocessing of surfaces of different materials is a growing technology for a variety of industrial applications, such as photovoltaics, photonics, micro- and optoelectronics. The periodic surface nanostructuring opens new niches for laser surface processing in industrial applications. The method may be used for solar cells structuring, writing surface waveguides, optical gratings, light extracting surfaces in light emitting diodes, surface enhanced Raman scattering, water-repellent surfaces, marking for products anti-counterfeiting. All listed applications require the fabrication of large-area, highly-regular and uniform periodic structures at high writing speed that is proposed in the present disclosure which solves the problems of low writing speed and low quality of periodic structures.

**Claims**

1. A method of obtaining a periodic structure on a surface of a substrate (12), using a pulsed laser beam (2) having a wavelength $\lambda$, wherein the method comprises the steps of:

    - providing the substrate (12) being made of material having an imaginary part of dielectric permittivity equal or higher than the absolute value of its real part for the laser beam wavelength $\lambda$; and
    - irradiating a spot on the surface of the substrate (12) by the pulsed laser beam (2), wherein

       - the laser pulse duration of said laser beam (2) is less than the time required by electrons in the substrate (12) for thermalization with a lattice; and
       - the pulsed laser beam (2) is linearly polarized to induce surface electromagnetic waves propagating on said surface along the polarization direction; and
       - < the diameter of the irradiated spot on the substrates (12) surface is smaller than three characteristic decay lengths of said surface electromagnetic wave and wherein the diameter of the irradiated spot is less or equal than 30 $\mu$m; and >
       - fluence of the pulsed laser beam (2) is higher than the ablation threshold,
       - irradiation of the surface of the substrate (12) is performed by irradiation of a plurality spots, wherein the spots partially overlap each other, wherein the overlap between two pulses is at least 30%, **characterized in that** < -> **in that** said periodic structure has a dispersion angle of FFT signal less than 15°.

2. The method according to claim 1, wherein said plurality of spots are arranged in at least one line and the laser beam (2) scans over the at least one line.

3. The method according to claim 1 or 2 further comprising the step of increasing an aperture of the pulsed laser beam (2) and subsequent focusing of the laser beam (2) to the surface of the substrate (12).

4. The method according to any one of the preceding claims, wherein the laser pulse duration of the laser beam (2) is smaller or equal to 10 picoseconds, more preferably it is lower than 1 picosecond.

5. The method according to any one of the preceding claims, wherein the laser beam wavelength is less than 1300 nm, and the material of the substrate (2)

6. The method according to any one of claims 1 to 4, wherein the laser beam wavelength is less than 900 nm, and the material of the substrate (2) is selected from the group consisting of: Be, Bi, Co, Cr, Fe, Mo, Nb, Ni, steels, Ti, V, W, alloys thereof.

7. The method according to any one of claims 1 to 4, wherein the laser beam wavelength is less than 500 nm, and the material of the substrate (2) is selected from the group consisting of: Ag, Au, Be, Bi, Co, Cr, Cu, Fe, Mo, Nb, Ni, Pt, steels, Ta, Ti, V, W, alloys thereof.

8. A device for producing a periodic structure on a surface of a substrate (12) comprises:

   - means for generation of a pulsed laser beam (2) with pulse duration smaller or equal to 10 ps and repetition rate higher than 1 kHz;
   - means for scanning and delivering the pulsed laser beam (2) to the substrate (12), preferably a galvanometric scanning head (9);
   - a polarizer (11);
   - a half-wave plate (8) rotatable with respect to the polarizer (11); and
   - means for focusing the pulsed laser beam to the substrate (12), preferably f-theta lens (10), **characterized in that**
   - the polarizer (11) is placed between the means for focusing the pulsed laser beam and the substrate (12); and
   - the means for generation of a pulsed laser beam is delivering the laser beam (2) on a spot having diameter less or equal 30 $\mu$m.

9. The device according to claim 8, wherein the means for generation of a pulsed laser beam (2) have a repetition rate at least 1 MHz.

10. The device according to claims 8 to 9 further comprises a telescope located between the means for generation the pulsed laser beam (2) and the means for scanning and delivering the pulsed laser beam (2) to the substrate (12).

11. The device according to any one of claim 10 further comprises an attenuator (3) located between the means for generation the pulsed laser beam (2) and the means for scanning and delivering the pulsed laser beam (2) to the substrate (12) and/or between the means for generation the pulsed laser beam (2) and the telescope.

12. The device according to claims 10 or 11, wherein the telescope comprises a pair of lenses (6) and (7).

13. The device according to anyone from the claims 8 to 12 further comprises a motorized xyz-stage (13) capable of translational and rotational movement of the substrate (12).

**Patentansprüche**

1. Ein Verfahren zur Herstellung einer periodischen Struktur auf einer Oberfläche eines Substrats (12) unter Verwendung eines gepulsten Laserstrahls (2), der eine Wellenlänge A hat, wobei das Verfahren die Schritte umfasst:

   - Bereitstellen des Substrats (12), das aus dem Material erzeugt ist, der einen Imaginärteil von dielektrischer Permittivität hat, der gleich oder höher als der Absolutwert seines Realteils für die Wellenlänge A des Laserstrahls ist; und
   - Bestrahlung eines Flecks auf der Oberfläche des Substrats (12) durch den gepulsten Laserstrahl (2), wobei
   - die Laserpulsdauer von dem genannten Laserstrahl (2) weniger als die Zeit, die Elektronen in dem Substrat (12) zur Thermalisierung mit einem Gitter brauchen, ist; und
   - der gepulste Laserstrahl (2) linear polarisiert ist, um elektromagnetische Oberflächenwellen zu induzieren, die sich auf der genannten Oberfläche entlang der Polarisationsrichtung ausbreiten; und
   - der Durchmesser des bestrahlten Flecks auf der Oberfläche des Substrats (12) kleiner als drei charakteristische Dämpfungslängen der genannten oberflächenelektromagnetischen Welle ist und wobei der Durchmesser des bestrahlten Flecks kleiner als 30 $\mu$m oder gleich ist; und
   - Fluenz des gepulsten Laserstrahls (2) höher als die Abtragsschwelle ist,
   - Abstrahlung der Oberfläche des Substrats (12) durch Abstrahlung einer Vielzahl der Flecke durchgeführt ist, wobei die Flecke teilweise einander überlappen, wobei die Überlappung zwischen zwei Impulsen mindestens 30% ist,

   **dadurch gekennzeichnet, dass** die genannte periodische Struktur einen Abstrahlwinkel des FFT-Signals hat, der kleiner als 15° ist.

2. Das Verfahren nach Anspruch 1, **dadurch gekennzeichnet, dass** die genannte Vielzahl der Flecke in mindestens einer Linie angeordnet sind und der Laserstrahl (2) über mindestens eine Linie scannt.

3. Das Verfahren nach Anspruch 1 oder 2, **dadurch gekennzeichnet, dass** das weiterhin den Schritt der Erhöhung von der Apertur des gepulsten Laserstrahls (2) und der anschließenden Fokussierung des Laserstrahls (2) auf die Oberfläche des Substrats (12) umfasst.

4. Das Verfahren nach einem der vorhergehenden Ansprüche, **dadurch gekennzeichnet, dass** die Laserpulsdauer des Laserstrahls (2) weniger oder gleich 10 Picosekunden, besonders bevorzugt weniger als 1 Picosekunde ist.

5. Das Verfahren nach einem der vorhergehenden Ansprüche, **dadurch gekennzeichnet, dass** die Wellenlänge des Laserstrahls weniger als 1300 nm ist, wobei der Material des Substrats (2) aus der Gruppe, die aus Cr, Fe, Mo, Ni, Stählen, Ti, W, Legierungen davon besteht, ausgewählt ist.

6. Das Verfahren nach einem der Ansprüche 1-4, **dadurch gekennzeichnet, dass** die Wellenlänge des Laserstrahls weniger als 900 nm ist, wobei der Material des Substrats (2) aus der Gruppe, die aus Be, Bi, Co, Cr, Fe, Mo, Nb, Ni, Stählen, Ti, V, W, Legierungen davon besteht, ausgewählt ist.

7. Das Verfahren nach einem der Ansprüche 1-4, **dadurch gekennzeichnet, dass** die Wellenlänge des Laserstrahls weniger als 500 nm ist, wobei der Material des Substrats (2) aus der Gruppe, die aus Ag, Au, Be, Bi, Co, Cr, Cu, Fe, Mo, Nb, Ni, Pt, Stählen, Ta, Ti, V, W, Legierungen davon besteht, ausgewählt ist.

8. Eine Vorrichtung zur Herstellung einer periodischen Struktur auf einer Oberfläche eines Substrats (12), die umfasst:

   - ein Mittel zur Erzeugung eines gepulsten Laserstrahls (2) mit Pulsdauer, die weniger oder gleich 10 ps ist, und Wiederholfrequenz, die höher als 1 kHz ist;
   - ein Mittel zum Scannen und zur Übertragung des gepulsten Laserstrahls (2) auf das Substrat (12), bevorzugt einen galvanometrischen Abtastkopf (9);
   - einen Polarisator (11);
   - eine Halbwellenplatte (8), die in Bezug auf den Polarisator (11) drehbar ist; und
   - ein Mittel zur Fokussierung des gepulsten Laserstrahls auf das Substrat (12), bevorzugt eine F-Theta-Linse (10), **dadurch gekennzeichnet, dass**
   - der Polarisator (11) zwischen dem Mittel zur Fokussierung des gepulsten Laserstrahls und dem Substrat (12) angeordnet ist; und
   - das Mittel zur Erzeugung eines gepulsten Laserstrahls den Laserstrahl (2) auf den Fleck mit der Durchmesser, der kleiner oder gleich 30 μm ist, überträgt.

9. Die Vorrichtung nach Anspruch 8, **dadurch gekennzeichnet, dass** das Mittel zur Erzeugung eines gepulsten Laserstrahls (2) eine Wiederholfrequenz, die mindestens 1 MHz ist, hat.

10. Die Vorrichtung nach Ansprüchen 8-9, **dadurch gekennzeichnet, dass** die weiterhin ein Teleskop, das zwischen dem Mittel zur Erzeugung des gepulsten Laserstrahls (2) und dem Mittel zum Scannen und zur Übertragung des gepulsten Laserstrahls (2) auf das Substrat (12) angeordnet ist, umfasst.

11. Die Vorrichtung nach einem des Anspruchs 10, **dadurch gekennzeichnet, dass** die weiterhin einen Dämpfer (3), der zwischen dem Mittel zur Erzeugung des gepulsten Laserstrahls (2) und dem Mittel zum Scannen und zur Übertragung des gepulsten Laserstrahls (2) auf das Substrat (12) und/oder zwischen dem Mittel zur Erzeugung des gepulsten Laserstrahls (2) und dem Teleskop angeordnet ist, umfasst.

12. Die Vorrichtung nach Anspruch 10 oder 11, **dadurch gekennzeichnet, dass** das Teleskop ein Paar von Linsen (6) und (7) umfasst.

13. Die Vorrichtung nach einem der Ansprüche 8-12, **dadurch gekennzeichnet, dass** die weiterhin eine motorisierte xyz-Bühne (13), die zur translatorischen und rotatorischen Bewegung des Substrats (12) fähig ist, umfasst.

## Revendications

1. Un procédé pour obtenir une structure périodique sur une surface d'un substrat (12), en utilisant un faisceau laser pulsé (2) ayant une longueur d'onde A, le procédé comprenant les étapes pour:

   - fournir le substrat (12) en un matériau ayant une partie imaginaire de permittivité diélectrique égale ou supérieure à la valeur absolue de sa partie réelle selon la longueur d'onde A du faisceau laser; et
   - irradier un point sur la surface du substrat (12) par le faisceau laser pulsé (2), dans lequel

     - la durée d'impulsion laser dudit faisceau laser (2) est inférieure au temps requis par les électrons dans le substrat (12) pour la thermalisation avec une grille; et
     - le faisceau laser pulsé (2) est polarisé linéairement pour induire des ondes électromagnétiques de surface se propageant sur ladite surface le long de la direction de polarisation; et

le diamètre du point irradié sur la surface des substrats (12) est

inférieure à trois longueurs de décroissance caractéristiques de ladite onde électromagnétique de surface et dans lequel le diamètre du spot irradié est inférieur ou égal à 30 μm; et

- la fluence du faisceau laser pulsé (2) est supérieure au seuil d'ablation,
- l'irradiation de la surface du substrat (12) est réalisée par irradiation d'une pluralité de points, dans lequel les points se chevauchent partiellement, dans lequel le chevauchement entre deux impulsions est d'au moins 30%,

**caractérisé en ce que** ladite structure périodique a un angle de dispersion du signal FFT inférieur à 15°.

2. Le procédé selon la revendication 1, dans lequel ladite pluralité de points sont disposés en au moins une ligne et le faisceau laser (2) balaye au moins une ligne.

3. Le procédé selon la revendication 1 ou 2, comprenant en outre l'étape d'augmentation d'une ouverture du faisceau laser pulsé (2) et de focalisation ultérieure du faisceau laser (2) sur la surface du substrat (12).

4. Le procédé selon l'une quelconque des revendications précédentes, dans lequel la durée d'impulsion laser du faisceau laser (2) est inférieure ou égale à 10 picosecondes, plus préférablement elle est inférieure à 1 picoseconde.

5. Le procédé selon l'une quelconque des revendications précédentes, dans lequel la longueur d'onde du faisceau laser est inférieure à 1300 nm, et le matériau du substrat (2) est choisi du groupe constitué de: Cr, Fe, Mo, Ni, aciers, Ti, W, alliages de ceux-ci.

6. Le procédé selon l'une quelconque des revendications 1 à 4, dans lequel la longueur d'onde du faisceau laser est inférieure à 900 nm, et le matériau du substrat (2) est choisi du groupe constitué de: Be, Bi, Co, Cr, Fe, Mo, Nb, Ni, aciers, Ti, V, W, alliages de ceux-ci.

7. Le procédé selon l'une quelconque des revendications 1 à 4, dans lequel la longueur d'onde du faisceau laser est inférieure à 500 nm, et le matériau du substrat (2) est choisi du groupe constitué de: Ag, Au, Be, Bi, Co, Cr, Cu, Fe, Mo, Nb, Ni, Pt, aciers, Ta, Ti, V, W, alliages de ceux-ci.

8. Un dispositif pour produire une structure périodique sur une surface d'un substrat (12) comprenant:

- un moyen pour générer un faisceau laser pulsé (2) avec une durée d'impulsion inférieure ou égale à 10 ps et une fréquence de répétition supérieure à 1 kHz;
- un moyen pour balayer et délivrer le faisceau laser pulsé (2) au substrat (12), de préférence une tête de balayage galvanométrique (9);
- un polariseur (11);
- une platine demi-onde (8) rotative par rapport au polariseur (11); et
- un moyen pour focaliser le faisceau laser pulsé sur le substrat (12), de préférence une lentille f-thêta (10), **caractérisé en ce que**
- le polariseur (11) est placé entre les moyens pour focaliser du faisceau laser pulsé et le substrat (12); et
- le moyen pour générer un faisceau laser pulsé délivre le faisceau laser (2) sur un point de diamètre inférieur ou égal à 30 μm.

9. Le dispositif selon la revendication 8, dans lequel le moyen pour générer un faisceau laser pulsé (2) a une fréquence de répétition d'au moins 1 MHz.

10. Le dispositif selon les revendications 8 à 9, comprenant en outre un télescope situé entre le moyen pour générer le faisceau laser pulsé (2) et le moyen pour balayer et délivrer le faisceau laser pulsé (2) au substrat (12).

11. Le dispositif selon l'une quelconque des revendications 10, comprenant en outre un atténuateur (3) situé entre le moyen pour générer le faisceau laser pulsé (2) et le moyen pour balayer et délivrer le faisceau laser pulsé (2) au substrat (12) et/ou entre le moyen pour générer le faisceau laser pulsé (2) et le télescope.

12. Le dispositif selon la revendication 10 ou 11, dans lequel le télescope comprend une paire de lentilles (6) et (7).

13. Le dispositif selon l'une quelconque des revendications 8 à 12, comprenant en outre une plate-forme xyz motorisée (13) permettant le mouvement de translation et de rotation du substrat (12).

[Fig. 1]

[Fig. 2]

[Fig. 3]

[Fig. 4]

E: polarization direction
S: scanning direction

[Fig. 5]

Illuminated spot

Overlap between illuminated spots in scanline

Overlap between scanlines

Scanning direction

Scanning direction

[Fig. 6]

[Fig. 7]

[Fig. 8]

(a)          (b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7875414 B

- US 20080216926 A

**Non-patent literature cited in the description**

- **A. RUIZ DE LA CRUZ ; R. LAHOZ ; J. SIEGEL ; G.F. DE LA FUENTE ; J. SOLIS.** High speed inscription of uniform, large-area laser-induced periodic surface structures in Crfilms using a high repetition rate fs laser. *Opt. Lett.,* 2014, vol. 39, 2491-2494